# EUROPÄISCHE PATENTANMELDUNG

(11) **EP 3 598 081 A1**
(43) Veröffentlichungstag der Anmeldung: **22.01.2020**
(21) Anmeldenummer: 18183984.6
(22) Anmeldetag: 17.07.2018
(51) Int. Cl.: G01F 22/00, B65D 1/00, G01F 23/28, G01F 23/284, G01F 23/292, G01S 13/88, G06Q 10/08, G08C 17/00, G08B 21/18, G08B 25/00, B65D 88/12, B65D 90/00, G08B 26/00, G07C 11/00

(54) **VORRICHTUNG ZUR ÜBERWACHUNG EINES ZUSTANDSPARAMETERS EINES INDUSTRIECONTAINERS**

(71) Anmelder: Packwise GmbH, 01069 Dresden (DE)
(72) Erfinder: BERNHARDT, René, 01737 Kleinopitz (DE); WEGER, Félix, 01309 Dresden (DE); WEGER, Gesche, 01309 Dresden (DE)
(74) Vertreter: Hannke, Christian

(57) **Zusammenfassung**

Die Erfindung betrifft eine Vorrichtung zur Überwachung zumindest eines Zustandsparameters eines Industriecontainers insbesondere eines nach Norm gefertigten Intermediate Bulk Containers (IBC), wobei die Vorrichtung in einer Verschlussvorrichtung für den Industriecontainer integriert ist und zumindest eine Sensoreinrichtung zur Messung eines Zustandsparameters, eine Steuereinrichtung, eine Energieversorgungseinrichtung und eine Sende- und Empfangseinrichtung, mittels welcher Daten, insbesondere Zustandsparameterdaten, an einen Server übermittelbar sind und mittels welcher der Standort des Industriecontainers bestimmbar ist, umfasst.

## Beschreibung

Die Erfindung betrifft in einem ersten Aspekt eine Vorrichtung zur Überwachung zumindest eines Zustandsparameters eines Industriecontainers. Nach einem weiteren Aspekt betrifft die Erfindung ein Verfahren zur Überwachung zumindest eines Zustandsparameters eines Industriecontainers. Nach einem weiteren Aspekt betrifft die Erfindung ein System zur Überwachung zumindest eines Zustandsparameters eines Industriecontainers. Schließlich betrifft die Erfindung einen Industriecontainer mit einer Vorrichtung zur Überwachung zumindest eines Zustandsparameters eines Industriecontainers.

In der Industrie werden zum Transport und zur Lagerung von Flüssigkeiten beziehungsweise rieselfähiger Stoffe Industriecontainer verwendet. Oftmals sind dies sogenannte intermediate Bulk Container (IBC). Typische Anwendungsbereiche finden sich in der Produktion von Chemikalien, Lebensmitteln, Kosmetik und Pharmazeutika. Um den Transport und Lagerung zu vereinfachen, sind diese Industriecontainer nach festgelegten Normen gefertigt. Am häufigsten sind dabei Kombinations-IBC. Der Container besteht aus einem Kunststofftank, welcher auf einer Palette angeordnet ist und von einem Gitterkäfig oder Rohrrahmen umgeben ist. Es gibt jedoch auch noch weitere unterschiedliche Ausführungsformen beispielsweise Metall-IBC, welche oft zum Transport von Gefahrgut eingesetzt werden. Je nach Bauweise und Ausführung haben die IBC ein Volumen von 300 bis zu 3000 Litern.

Dabei ist es essenziell, dass Zustandsparameter des Industriecontainers möglichst lückenlos überwacht werden können. Solche Zustandsparameter können der Füllstand des Industriecontainers sein, die Innenraumtemperatur, bestimmte Zustandsparameter des gelagerten Stoffs oder aber auch eine Bewegung des Industriecontainers.

Die Unterbringung der einzelnen Sensoren an beziehungsweise in einem Industriecontainer gestaltet sich jedoch schwierig. Oft ist ein zusätzlicher Anbau oder ein Eingriff in den Innenraum notwendig um die Sensoren entsprechend zu platzieren. Ferner ist eine besondere Infrastruktur für den Betrieb notwendig. Es muss beispielsweise ein entsprechendes Netzwerk und/oder entsprechende Kabel zu dem Industriecontainer bereitgestellt werden, um die Energieversorgungseinrichtung und/oder die Datenübertragung zu einem Server zu gewährleisten.

Ferner ist es oft schwierig den genauen Standort des Industriecontainers zu ermitteln, da diese in Fabrikhallen und unterirdischen Lagerhallen gelagert werden oder gerade von einem Standort zum nächsten Standort transportiert werden. Entsprechende Service- und Wartungsunternehmen für den Industriecontainer müssen demnach großen Aufwand betreiben, um den Standort des betroffenen Industriecontainers zu ermitteln.

Aufgabe der vorliegenden Erfindung ist es, eine Vorrichtung zur Überwachung von Zustandsparametern eines Industriecontainers bereitzustellen, welche den eingangs genannten Nachteilen Abhilfe leistet.

Die Aufgabe wird gelöst von einer Vorrichtung zur Überwachung zumindest eines Zustandsparameters eines Industriecontainers insbesondere eines nach Norm gefertigten Intermediate Bulk Containers (IBC), wobei die Vorrichtung in einer Verschlussvorrichtung für den Industriecontainer integriert ist und zumindest eine Sensoreinrichtung zur Messung eines Zustandsparameters, eine Steuereinrichtung, eine Energieversorgungseinrichtung und eine Sende- und Empfangseinrichtung, mittels welcher Daten, insbesondere Zustandsparameterdaten, an einen Server übermittelbar sind und mittels welcher der Standort des Industriecontainers bestimmbar ist, umfasst.

Durch die Integration der Vorrichtung zur Überwachung zumindest eines Zustandsparameters in die Verschlussvorrichtung ist es auf einfachste Weise möglich einen Zugang zum Inneren des Industriecontainers zu gewährleisten. Es ist weder ein Anbau an dem Container noch zusätzliche Platzierung von Sensoren im Innenraum des Industriecontainers notwendig. Da die Industriecontainer insbesondere die IBC nach vorgegebenen Normen hergestellt sind, kann die erfindungsgemäße Verschlussvorrichtung mit der integrierten Vorrichtung diesen Normen entsprechen. Es ist somit möglich ältere, sich bereits in Gebrauch befindliche, Industriecontainer nachträglich mit einer erfindungsgemäßen Verschlussvorrichtung auszustatten. Ferner kann bei Auftreten eines Defekts in der Vorrichtung einfach nur die erfindungsgemäße Verschlussvorrichtung ausgetauscht werden. Durch das Vorsehen einer integrierten, unabhängigen Energieversorgungseinrichtung und einer Sende- und Empfangseinrichtung, mittels welcher Daten an einen Server übermittelbar sind und mittels welcher der Standort des Industriecontainers bestimmbar ist, kann die erfindungsgemäße Vorrichtung autark funktionieren und jederzeit dem Server den Standort und die gewünschten Zustandsparameter des Industriecontainers übermitteln.

Eine Verschlussvorrichtung kann dabei vorzugsweise ein Schraubverschluss sein.

Vorzugsweise ist die Energieversorgungseinrichtung eine Batterie. Für Industriecontainer, welche nicht in geschlossenen Räumen gelagert werden, kann zur Energieversorgung auch eine Solarzelle oder Ähnliches vorgesehen sein.

Nach einer bevorzugten Ausführungsform weist die Vorrichtung ein geschlossenes Gehäuse auf, welches sich entlang den horizontalen Richtungen (X, Y) und einer Höhenrichtung (Z) erstreckt. Vorzugsweise weist das Gehäuse einen oberen Abschnitt auf. Bevorzugt weist dieser obere Abschnitt ein Gewinde auf, das kompatibel zu einem entsprechenden weiteren Gewinde des Industriecontainers ist. Um die Verschlussvorrichtung greifen zu können, ist es weiterhin vorteilhaft, dass der obere Abschnitt einen Griffbereich aufweist. Vorzugsweise weist das Gehäuse weiterhin einen unteren Abschnitt auf, welcher in Höhenrichtung (Z) von dem oberen Abschnitt beabstandet ist. Bevorzugt ist der untere Abschnitt in einer Ebene angeordnet, die durch Achsen aufgespannt ist, welche den horizontalen Richtungen (X, Y) entsprechen. Vorzugsweise ist diese Ebene parallel zu einer horizontalen Öffnungsebene der Öffnung des Industriecontainers angeordnet. Vorzugsweise ist der untere Abschnitt in Richtung des Inhalts des Industriecontainers ausgerichtet. Bevorzugt ragt der untere Abschnitt in den Industriecontainer hinein, wenn die Verschlussvorrichtung an dem Industriecontainer angebracht ist.

Vorteilhafterweise besteht das Gehäuse aus einem Kunststoff.

Vorzugsweise sind der obere und der untere Abschnitt des Gehäuses durch eine kraft- und/ oder formschlüssige Verbindung dichtend miteinander verbunden. Mögliche Verbindungsarten sind ein Schnappverschluss eine Schraubverbindung oder ähnliches. Eine solche Verbindung hat den Vorteil, dass das Gehäuse wieder geöffnet werden kann. Es können somit Bauteile wie beispielsweise die Energieversorgungseinrichtung ausgetauscht werden. Vorteilhafterweise sind der obere und der untere Abschnitt dichtend miteinander verbunden, wodurch keine Feuchtigkeit oder ähnliches in das Gehäuse eindringen kann. Es wäre jedoch auch denkbar, dass der obere und der unter Abschnitt durch eine stoffschlüssige Verbindung, wie beispielsweise eine Klebverbindung oder eine Schweißverbindung miteinander verbunden sind. Ebenso wäre es möglich, dass das Gehäuse einstückig gefertigt ist. Ein solches Gehäuse könnte beispielsweise durch ein Spritzgussverfahren gefertigt sein.

Nach einer besonders bevorzugten Ausführungsform ist zumindest eine kontaktlose Sensoreinrichtung vorgesehen, mittels welcher der Füllstand der Flüssigkeit in dem Industriecontainer messbar ist. Unter einer kontaktlosen Sensoreinrichtung ist hierbei eine Sensoreinrichtung zu verstehen, welche in keinem direkten Kontakt mit dem Inhalt des Industriecontainers steht. Aus dem Stand der Technik sind Füllstandsensoren bekannt, welche einen Schwimmer verwenden. Eine solche Ausgestaltung ist fehleranfällig und insbesondere dann unerwünscht, wenn sich eine aggressive Flüssigkeit wie beispielsweise eine Säure in dem Industriecontainer befindet. Eine kontaktlose Sensoreinrichtung hat den Vorteil nicht direkt mit einem solchen aggressiven Inhalt in Kontakt zu stehen. Derartige kontaktlose Sensoreinrichtungen können beispielsweise Ultraschallsensoren, akustische Sensoren, induktive Sensoren, kapazitive Sensoren oder Radarsensoren sein.

Nach einer besonders bevorzugten Ausführungsform ist die kontaktlose Sensoreinrichtung eine optische Sensoreinrichtung. Die bevorzugte optische Sensoreinrichtung ermöglicht demnach ein kontaktloses Messen des Füllstands in einem Industriecontainer. Diese haben im Vergleich zu beispielsweise Ultraschallsensoren den Vorteil, dass sie vergleichsweise billig sind. Ebenso beanspruchen Ultraschallsensoren im Vergleich zu optischen Sensoren viel Bauraum, wodurch diese ungeeignet wären, um in einer entsprechenden Verschlussvorrichtung integriert zu werden. Ultraschallsensoren benötigen darüber hinaus einen direkten Kontakt zur Luft, die sich über der zu messenden Flüssigkeit befindet. Dadurch müsste der UltraschallSensor selbst resistent gegenüber einem möglicherweise aggressiven Inhalt, beispielsweise Chemikalien sein und auch gegen Anhaftungen geschützt werden. Dies macht dann den Ultraschall-Sensor teuer und unpraktisch. Ein optischer Sensor kann vorzugsweise in einem geschlossenen Gehäuse angeordnet sein. Ein solches geschlossenes Gehäuse ist vorteilhafterweise mit einem entsprechend transparenten Schutzfenster ausgestattet, durch welches die emittierten und die detektierten Photonen des optischen Sensors treten können. Ein solches transparentes Schutzfenster kann beispielsweise aus einem transparenten Kunststoff bestehen. Vorteilhafterweise besteht das Geschlossene Gehäuse, sowie das transparente Schutzfenster aus einem chemikalienbeständigen Material, weiter bevorzugt aus einem chemikalienbeständigen Kunststoff.

Nach einer weiteren bevorzugten Ausführungsform ist die kontaktlose Sensoreinrichtung eine Radar-Sensoreinrichtung. Zur Messung des Füllstands in dem Industriecontainer kann somit auch eine Radar-Sensoreinrichtung verwendet werden. Das Prinzip der Messung ähnelt dabei der optischen Messung insofern, dass mittels eines Emitters ein Signal in Richtung des zu messenden Abstandes gesendet wird und der vom Inhalt des Industriecontainers reflektierte Teil des Signals durch einen Detektor wieder empfangen wird. Im Unterschied zu einer optischen Sensoreinrichtung werden bei einer Radar-Sensoreinrichtung elektromagnetische Wellen im Radiofrequenzbereich verwendet. Vorzugsweise werden durch den Emitter gepulste Radarsignale versendet. Der Pulsabstand beträgt dabei vorzugsweise einige Mikrosekunden. Der Abstand kann dann durch Messung der verstrichenen Zeit zwischen Senden und Empfangen des Pulses berechnet werden.

Vorzugsweise weist die Radar-Sensoreinrichtung einen Dauerstrichradaremitter (cw-radar , continuous wave) auf. Eine solche Ausführungsform ist für die Messung geringer Abstände eher geeignet als die Anwendung einer gepulsten Emission. Der Dauerstrichradaremitter emittiert ein frequenzmoduliertes Radarsignal (FMCW-Radar - frequency modulated continuous wave). Da bekannt ist zu welchem Zeitpunkt das Radarsignal mit welcher Frequenz gesendet wurde, kann die benötigte Zeit des Radarsignales mit einer bestimmten Frequenz zwischen Emission und Detektion bestimmt werden. Hieraus kann wiederum der Abstand zu der Oberfläche des Inhalts des Industriecontainers errechnet werden.

Das Vorsehen einer Radar-Sensoreinrichtung in der Verschlussvorrichtung eines Industriecontainers ist dahingehend weiterhin vorteilhaft, dass weder ein direkter Kontakt in Richtung des Medium notwendig noch irgendeine Art von durchlässiger Schicht (wie z.B. das optische Fenster beim optischen Sensor) vorhanden sein muss. Allerdings darf sich in dem Weg zwischen der Sensoreinrichtung und dem zu messenden Inhalts keine metallischen oder flüssigen Hindernisse befinden.

Die Radar-Sensoreinrichtung ist vorzugsweise in einem komplett geschlossenen Kunststoffgehäuse untergebracht. Damit ist ein hervorragender Schutz vor Chemikalien jeglicher Art gegeben.

Nach einer weiteren bevorzugten Ausführungsform ist die Radar-Sensoreinrichtung ein One-Chip-Sensor, auf welchem der Emitter, der Detektor und eine Signalverarbeitungseinrichtung auf einem Chip angeordnet sind.

Nach einer weiteren Ausführungsform weist die Vorrichtung zur Überwachung von Zustandsparametern eine Temperatursensoreinrichtung und/oder eine Bewegungssensoreinrichtung und/oder eine Sensoreinrichtung zur Überwachung der aus dem Industriecontainer entnommenen Stoffmenge und/oder eine Sensoreinrichtung zur spektralen Analyse (4e) des Inhalts des Industriecontainers auf. Unter Stoffmenge ist hier das sich in dem Industriecontainer befindliche Medium zu verstehen. Dies ist in der Regel eine Flüssigkeit oder ein rieselfähiger Stoff. Die Erfindung ist jedoch nicht beschränkt auf derartige Sensoren. Ein Vorsehen von Sensoren zur Detektion weiterer Zustandsparameter ist durchaus denkbar.

Mittels einer Temperatursensoreinrichtung kann die Innenraumtemperatur des Industriecontainers überwacht werden. Bei Übersteigen einer kritischen Temperatur kann dann ein entsprechendes Wartungspersonal alarmiert werden. Da durch die erfindungsgemäße Vorrichtung zugleich exakte Standortinformationen dem Server übermittelt werden, kann das Wartungspersonal schnell zu dem entsprechenden Industriecontainer gelangen.

Eine Bewegungssensoreinrichtung kann beispielsweise eine Kippbewegung detektieren. Insbesondere bei Lagerung von Gefahrgütern kann ein Kippen des Industriecontainers eine nicht unerhebliche Gefahr darstellen. Auch hier kann das Wartungspersonal schnell zu dem entsprechenden Industriecontainer gelangen, da durch die erfindungsgemäße Vorrichtung zugleich exakte Standortinformationen bereitgestellt werden.

Bei einer Sensoreinrichtung zur spektralen Analyse des Inhaltes des Industriecontainers wird ähnlich der optischen Sensoreinrichtung Licht zum Inhalt ausgesendet und die Reflektion empfangen. Es wird dabei der Nahinfrarotwellenlängenbereich genutzt, da in diesem Wellenlängenbereich stofftypische Reflektionen durch die Absortion von Lichtenergie in Molekülschwingungen zu erwarten ist. Das Frequenzspektrum des empfangenen/reflektierten Nahinfrarotlichtes kann entsprechend analysiert werden, um Rückschlüsse auf den Inhaltsstoff im Industriecontainer zu ziehen.

Vorzugsweise steuert die Steuereinrichtung die zumindest eine Sensoreinrichtung, beispielsweise die Sensoreinrichtung zur Überwachung des Füllstandes an. Eine entsprechende Messung einer Sensoreinrichtung kann kontinuierlich durchgeführt werden in bestimmten vorgegebenen Messintervallen oder auf Anweisung durch einen Server. Ferner kann eine Messung als Reaktion auf eine Messgröße einer weiteren Sensoreinrichtung beispielsweise der Temperatursensoreinrichtung, der Bewegungssensoreinrichtung, der Sensoreinrichtung zur spektralen Analyse des Inhalts des Industriecontainers oder und/oder eine Sensoreinrichtung zur Überwachung der aus dem Industriecontainer entnommenen Stoffmenge durchgeführt werden.

So kann beispielsweise eine Füllstandsmessung anhand eines Befehls durch den Server ausgeführt werden oder anhand eines vorgegebenen Messintervalls durchgeführt werden. Die Steuereinrichtung kann eine entsprechende Messung anhand unterschiedlicher Vorgaben auslösen. Denkbar wäre die Vorgabe eines Zeitintervalls innerhalb dessen eine Füllstandsmessung durchgeführt wird. Dazu ist die Steuereinrichtung vorteilhafterweise mit einem Zeitgeber ausgestattet. Es ist jedoch auch denkbar eine Füllstandsmessung aufgrund von Sensordaten einer weiteren Sensoreinrichtung durchzuführen. So kann nach der Entnahme einer größeren Stoffmenge aus dem Industriecontainer eine Füllstandsmessung durchgeführt werden, wobei eine solche Entnahme durch einen entsprechenden Sensor messbar ist. Denkbar wäre auch eine Füllstandsmessung bei Erreichen einer vorgegebenen Temperatur durchzuführen.

Nach einer bevorzugten Ausführungsform weist die optische Sensoreinrichtung einen Photonenemitter und einen Photonendetektor auf. Vorzugsweise sind der Photonenemitter und einen Photonendetektor räumlich getrennt angeordnet. Bevorzugt sind der Photonenemitter und ein Photonendetektor in einer Ebene nebeneinander angeordnet, wobei die Ebene durch den horizontalen Richtungen (X, Y) entsprechenden Achsen aufgespannt ist. Bevorzugt sind der Photonenemitter und der Photonendetektor an dem unteren Abschnitt des Gehäuses angeordnet. Vorzugsweise weist der untere Abschnitt des Gehäuses eine Öffnung auf, in welcher die optische Sensoreinrichtung angeordnet ist, wobei die optische Sensoreinrichtung sich im Inneren des Gehäuses befindet.

Als Photonenemitter kommen beispielsweise Leuchtdioden oder Laserdioden infrage. Mögliche Photonendetektoren sind Halbleiterdetektoren, Photodioden, Photomultiplier, CCD-Sensoren, Photozellen.

Die Bestimmung des Füllstands erfolgt vorzugsweise durch die Messung der Zeitdauer, welche die emittierten Photonen bis zur Detektion benötigen. Die Photonen durchlaufen dabei eine Strecke ausgehend vom Photonenemitter bis zur Oberfläche des Inhalts. Dort werden diese zumindest teilweise reflektiert, um dann vom Photonendetektor detektiert zu werden. Mit Hilfe der Lichtgeschwindigkeit (x = t*c/2) kann ein Wert berechnet werden, welcher dem Abstand der Oberfläche des Inhalts zu der optischen Sensoreinrichtung proportional ist. Aus diesem Abstand kann dann der Füllstand bestimmt werden.

Vorzugsweise werden dabei Pulse mit vordefinierter Zeitdauer versendet. Eine solche vordefinierte Zeitdauer liegt bevorzugt im Bereich von einigen Nanosekunden. Anhand der Zeitdauer zwischen Emission und Detektion eines Pulses kann der Abstand entsprechend bestimmt werden.

Es wäre auch denkbar, dass der Photonenemitter ein frequenzmoduliertes Signal emittiert. Da bekannt ist, zu welchem Zeitpunkt dieses Signal mit welcher Frequenz gesendet wurde, kann die benötigte Zeit des Signales einer bestimmten Frequenz zwischen Emission und Detektion bestimmt werden. Hieraus kann wiederum der Abstand zu der Oberfläche des Inhalts des Industriecontainers errechnet werden

Zur Messfehlerreduktion wird der Mittelwert aus mehreren Füllstandsmessungen bestimmt.

Nach einer weiteren bevorzugten Ausführungsform sind der Photonenemitter und der Photonendetektor jeweils hinter einem für die entsprechenden Photonen transparenten Schutzfenster angeordnet. Darüber hinaus ist es bevorzugt, dass zwischen dem Photonenemitter und dem Photonendetektor eine für die entsprechenden Photonen nicht transparente Barriere angeordnet ist. Es hat sich als vorteilhaft herausgestellt, dass sich die Barriere zwischen den beiden transparenten Schutzfenstern entlang der Höhenrichtung (Z) erstreckt.

Durch eine solche Ausgestaltung kann ein sogenannter "Crosstalk" zwischen dem Photonenemitter und dem Photonendetektor vermieden werden. In der Regel befinden sich der Photonenemitter und der Photonendetektor in einem geschlossenen Gehäuse hinter einem transparenten Schutzfenster, welches Verschmutzungen von den Sensoren abhalten soll. Bei der Verwendung eines einzigen Schutzfensters besteht jedoch die Möglichkeit, dass emittierte Photonen von dem Schutzfenster reflektiert und dann von dem Photonendetektor detektiert werden. Hieraus ergeben sich fälschliche gemessene Distanzen. Bei zunehmenden Grad an Verschmutzung des Schutzfensters wird dieser beschriebene Effekt größer, da sich die Reflexionswahrscheinlichkeit an dem Schutzfenster durch die Verschmutzung erhöht. Durch die Verwendung von zwei getrennten Fenstern und das Versehen der entsprechenden intransparenten Barriere wird eine entsprechende Reflexion am Schutzfenster effektiv verhindert.

Nach einer weiteren bevorzugten Ausführungsform ist am unteren Abschnitt des Gehäuses eine trichterartige Spritzschutzeinrichtung angeordnet. Vorzugsweise erstreckt sich die trichterartige Spritzschutzeinrichtung ausgehend vom unteren Abschnitt entlang der Höhenrichtung (Z). Bevorzugt erstreckt sich die trichterartige Spritzschutzeinrichtung ausgehend vom unteren Abschnitt entlang der Höhenrichtung (Z). Die trichterartige Spritzschutzeinrichtung weist vorzugsweise eine erste Öffnung und in Höhenrichtung (Z) gegenüberliegende zweite Öffnung auf, wobei der erste Öffnungsdurchmesser der ersten Öffnung kleiner als der zweite Öffnungsdurchmesser der zweiten Öffnung ist. Vorzugsweise ist die optische Sensoreinrichtung zentrisch in der ersten Öffnung angeordnet.

Beim Transport oder durch eine Bewegung des Industriecontainers wird auch der Inhalt in Bewegung versetzt. Dadurch kann der Inhalt an die Verschlussvorrichtung beziehungsweise gegen die optische Sensoreinrichtung schwappen. Durch die dadurch entstehenden Verschmutzungen kann die Funktion der optischen Sensoreinrichtung beeinträchtigt werden. Bei bestimmten Flüssigkeiten, wie etwa Säuren kann die optische Sensoreinrichtung gar zerstört werden. Durch die trichterartige Spritzschutzeinrichtung wird die Wahrscheinlichkeit, dass der Inhalt des Industriecontainers bis zu der optischen Sensoreinrichtung gelangt, erheblich verringert.

Vorzugsweise ist der Öffnungswinkel der trichterartigen Spritzschutzeinrichtung dabei derart ausgestaltet, dass der Emissionskonus des Photonenemitters beziehungsweise das (konische) Sichtfeld des Photonendetektors nicht beeinträchtigt wird.

Nach einer bevorzugten Ausführungsform weist die trichterartige Spritzschutzeinrichtung eine innere Oberfläche auf, an welcher lamellenartige Vorsprünge angeordnet sind. Durch diese lammelenartigen Vorsprünge wird ein unerwünschtes Hochschwappen des Inhalts zu der optischen Sensoreinrichtung weiter minimiert. Die hochschwappende Flüssigkeit wird durch die lamellenartigen Vorsprünge aufgefangen und kann von diesen wieder in den Industriecontainer abtropfen.

Nach einer weiteren vorteilhaften Ausführungsform weisen das Gehäuse und/oder die Schutzfenster und/oder die trichterartige Spritzschutzeinrichtung superhydrophobe Oberflächen und/oder superamphiphobe Oberflächen und/oder Anti-Haft-Oberflächen auf.

Superhydrophobe und superamphiphobe Oberflächen sind sogenannte selbstreinigende Flächen. Superhydrophobe Oberflächen weisen wässrige Flüssigkeiten ab. Superamphiphobe Oberflächen weisen neben wässrigen Flüssigkeiten auch noch Öle beziehungsweise nichtpolare Flüssigkeiten ab. Solche Oberflächen weisen eine Mikro- oder Nanostruktur auf, welche eine Benetzung durch einen Tropfen verhindert. Tropfen haben aufgrund ihrer hohen Oberflächenspannung die Tendenz zur Minimierung ihrer Oberfläche, wodurch diese eine Kugelform aufweisen. Eine Benetzung einer Oberfläche erfolgt durch entsprechende Adhäsionskräfte. Die Mikro- oder Nanostrukturen sind derart ausgebildet, dass nur geringe Anteile des Tropfens in Kontakt mit der Oberfläche stehen und somit keine entsprechenden Adhäsionskräfte wirken. Die Tropfen perlen somit von der Oberfläche ab.

Mögliche Anti-Haft Beschichtungen können beispielsweise Polytetrafluorethylen enthalten oder eine keramische Beschichtung sein.

Wie bereits beschrieben können dem Server neben den Zustandsparameterdaten auch Daten bezüglich des Standorts des Industriecontainers bereitgestellt werden. Die genaue Lokalisierung des Industriecontainers während des Transports oder der Lagerung ist in der Regel jedoch schwierig. Aus dem Stand der Technik ist der Einsatz der GPS-Technik bekannt. Allerdings werden derartige Industriecontainer oftmals in Fabrikhallen oder unterirdischen Lagerhallen gelagert. An solchen Orten ist vielmals kein GPS Empfang möglich. Darüber hinaus bedingt der Einsatz der GPS-Technik einen hohen Energieverbrauch, wodurch ein Vorsehen einer unabhängigen Energieversorgung für die Vorrichtung zur Überwachung des zumindest eines Zustandsparameters nicht möglich ist.

Vorteilhafterweise ist die Sende- und Empfangseinrichtung dazu geeignet über ein Wide Area Funknetz oder ein Mobilfunknetz mit einem Server zu kommunizieren. Solche Wide Area Funknetze werden für das sogenannte Internet of Things (loT) genutzt. Vorzugsweise sind zur Standortbestimmung BSSID- (Basic Service Set Identification-) Daten von in der Umgebung der Sende- und Empfangseinrichtung beziehungsweise der Vorrichtung zur Überwachung zumindest eines Zustandsparameters sich befindlichen WLAN-Accesspoints dem Server übermittelbar. Die Sende- und Empfangseinrichtung ist demnach dazu in der Lage BSSID-Daten umgebender WLAN-Accesspoints zu ermitteln.

Mit anderen Worten ist die Sende- und Empfangseinrichtung vorzugsweise eine IoT-Sende- und Empfangseinrichtung, welche ebenso WLAN-Eigenschaften besitzt. Vorzugsweise ist das Wide Area Funknetz ein IoT-Netzwerk oder ein Mobilfunknetz. Derartige IoT-Netzwerke können ein Narrow-Band IoT-Funknetz (NB-IoT, SIGFOX), ein Long Range Wide Area Network (LoRaWAN) sein. Ein IoT-Netzwerk hat den Vorteil, dass die benötigten Sende- und Empfangseinrichtungen äußerst energieeffizient arbeiten können. Mögliche Mobilfunknetze sind 2G- (USM)-Netze, 3G- (UMTS)-Netze, 4G- (LTE)Netze oder aber auch 5G-Netze.

Anhand der signalstärksten BSSIDs kann in einer Geo-Location-Datenbank der Standort des Industriecontainers sehr genau bestimmt werden.

Nach einer weiteren bevorzugten Ausführungsform ist die Sende- und Empfangseinrichtung dazu geeignet Identifikationsdaten einer Sendeeinrichtung zur Übermittlung von Identifikationsdaten des Industriecontainers zu empfangen. Bevorzugt wird zur Übermittlung der Identifikationsdaten des Industriecontainers eine Drahtlostechnologie beispielsweise eine NFC-Technologie, eine RFID-Technologie, eine WLAN-Technologie, oder eine Bluetooth-Technologie genutzt.

Die NFC-Technologie als auch die RFID-Technologie verwenden hochfrequente magnetische Wechselfelder zur Datenübertragung. Die RFID-Technologie ist in der Regel eine sogenannte "verbindungslose" Übertragung. Hierbei wird ein passiver Transponder verwendet, welcher durch das Wechselfeld eines Lesegeräts mit Energie versorgt wird. Die NFC-Technologie stellt darüber hinaus auch eine sogenannte "verbindungsbehaftete" Übertragung zur Verfügung. Bei der verbindungsbehafteten Übertragung oder auch Peer-to-Peer-Übertragung wird eine Übertragung zwischen zwei gleichwertigen Transmittern etabliert.

Die NFC-Technologie erreicht eine Datenübertragungsrate von 106 bis 424kbit/s. Die Datenübertragung basiert auf einer Amplitudenmodulation eines hochfrequenten Magnetfelds mit einer standardisierten Frequenz von 13,56 MHz. An einer Datenübertragung können lediglich zwei Teilnehmer beteiligt sein, ein sogenannter Initiator, welcher als Sender von Informationen fungiert und ein Empfänger, welcher diese Informationen empfängt.

Die NFC-Technologie stellt auch eine "verbindungslose" Übertragung analog zur RFID-Technik bereit. Eine solche Übertragung wir oft auch als passive Übertragung bezeichnet. Hier erzeugt lediglich der Initiator das hochfrequente Magnetfeld. Der Empfänger kann Daten mittels einer Lastmodulation übertragen. Dabei findet eine Energieaufnahme aus dem Magnetfeld durch einen speziell abgestimmten Schwingkreis des Empfängers statt, woraufhin der Initiator reagiert.

Bei der "verbindungsbehafteten" oder auch aktiven Übertragung erzeugt sowohl der Initiator als auch der Empfänger ein hochfrequentes Magnetfeld. Es wird zunächst ein sogenanntes "Handshake" durchgeführt, in dem eine Authentifizierung stattfindet und in den verschiedenen Einstellungen, wie beispielsweise die optimale Übertragungsgeschwindigkeit ausgewählt werden. Anschließend wird der Datenaustausch durchgeführt. Aufgrund der Authentifizierung gilt diese aktive Übertragung als wesentlich sicherer im Vergleich zu der passiven Übertragung.

Vorliegend ist sowohl eine aktive als auch eine passive Übertragung vorstellbar. An dem Industriecontainer ist eine Sendeeinrichtung zur Übermittlung von Identifikationsdaten des Industriecontainers angeordnet. Durch den Datenaustausch zwischen der Sende- und Empfangseinrichtung der Vorrichtung zur Überwachung zumindest eines Zustandsparameters und der an dem Industriecontainer angeordneten Sendeeinrichtung ist die Verschlussvorrichtung stets dem richtigen Industriecontainer zugeordnet.

Die einfache Nutzbarkeit durch die Unterbringung der Vorrichtung in der Verschlussvorrichtung bringt einen Nachteil mit sich, dass die Messungen der Zustandsparameter beziehungsweise die Standortbestimmung der Verschlussvorrichtung zugeordnet sind und nicht zwingend dem Industriecontainer, auf dem die Verschlussvorrichtung angeordnet ist. Dies ist insbesondere dann problematisch, wenn durch die Nutzung der Messdaten bestimmte Kreislaufsysteme sichergestellt werden sollen. Es besteht kein Schutz, dass die Verschlussvorrichtung den Industriecontainer wechselt. Durch die Sendeeinrichtung zur Übermittlung von Identifikationsdaten des Industriecontainers können eindeutige Identifikationsdaten des Industriecontainers übermittelt werden. Diese können vorteilhafterweise von der Steuereinrichtung entsprechend ihrer Richtigkeit überprüft werden. Vorzugsweise werden diese Identifikationsdaten auch dem Server übermittelt. Dies kann beispielsweise zusammen mit den Zustandsparameterdaten und den Standortdaten erfolgen. Die Zustandsparameterdaten und die Standortdaten können demnach eindeutig einem bestimmten Industriecontainer zugeordnet werden.

Dadurch kann eine durchgehende Zuordnung der Zustandsparameterdaten und der Standortdaten erfolgen, selbst wenn die Verschlussvorrichtung vertauscht worden wäre, wäre eine richtige Zuordnung gewährleistet, da der neue Industriecontainer neue Identifikationsdaten überträgt, wodurch die Zustandsparameterdaten und die Standortdaten richtig zuordenbar sind.

Ferner ergibt sich aus der Übertragung von Identifikationsdaten der Vorteil, dass festgestellt werden kann, ob sich die Verschlussvorrichtung überhaupt auf einem Industriecontainer befindet.

Nach einer weiteren bevorzugten Ausführungsform ist eine weitere Sensoreinrichtung vorgesehen, mittels welcher festgestellt werden kann, ob die Verschlussvorrichtung and dem Industriecontainer angeordnet ist. Eine solche Sensoreinrichtung könnte eine Lagesensoreinrichtung sein, welche die Position der Verschlussvorrichtung relativ zu dem Industriecontainer detektiert. Denkbar wäre auch eine Sensoreinrichtung, welche einen Eingriff des Gewindes der Verschlussvorrichtung an dem Gewinde des Industriecontainers detektiert.

Der Einsatz einer derartigen Sendeeinrichtung zur Übermittlung von Identifikationsdaten des Industriecontainers kann auch für andere Einsatzszenarien eingesetzt werden. Zum Beispiel kann ein Fahrer eines Transport-Unternehmens die auf seinen LKW verladenen Industriecontainer scannen. Damit könnte nach Senden dieser Transaktion an den Server festgestellt werden, dass und von wem der Industriecontainer gerade transportiert werden. Dies gilt natürlich ebenso für Anlieferungen, Lagerhallen etc. Das Scannen der Identifikationsdaten kann unter Verwendung der angeführten Drahtlostechnologien mittels allseits vorhandener Geräte, wie Smartphones oder Tablets, ausgeführt werden.

Es wäre auch denkbar die Verschlussvorrichtung mechanisch mit dem Industriecontainer zu verbinden, um eine entsprechende Zuordnung zu gewährleisten. Die könnte vorzugsweise mit einer Einmal-Verbindung, beispielsweise einem spezieller Kabelbinder erfolgen. Diese Verbinder dürften dann prozessseitig nur von bestimmten Teilnehmern angebracht werden. So kann bei Fehlen dieser Verbindung zumindest festgestellt werden, dass die durchgehende Nutzung der Vorrichtung zur Überwachung von Zustandsparametern nicht garantiert werden kann.

Nachteil bei dieser Lösung ist jedoch, dass bei einer Verwendung einer Verschlussvorrichtung für einen weiteren Industriecontainer die entsprechende Zuordnung bei dem Server geändert werden muss.

Vorzugsweise sind die Steuereinrichtung, die Sende- und Empfangseinrichtung und eine weitere Speichereinrichtung in einem Bauteil integriert. Solche Systeme werden auch "Systems on a chip" genannt und haben den Vorteil, dass sie nur wenig Bauraum einnehmen.

Die Aufgabe wird ebenso gelöst durch ein Verfahren zur Überwachung zumindest eines Zustandsparameters eines Industriecontainers, umfassend folgende Verfahrensschritte:
a. Durchführen einer Messung zumindest eines Zustandsparameters mittels zumindest einer Sensoreinrichtung;
b. Ermittlung von BSSID- (Basic Service Set Identification-) Daten von in der Umgebung der Sende- und Empfangseinrichtung sich befindlichen WLAN-Accesspoints;
c. Übermittlung der Zustandsparameterdaten und der BSSID-Daten durch die Sende- und Empfangseinrichtung an einen Server;
d. Verwendung der BSSID-Daten zur Bestimmung des Standorts des Industriecontainers durch den Server.

In Schritt a. wird zumindest ein Zustandsparameter mittels zumindest einer Sensoreinrichtung gemessen. Die der Messung entsprechenden Zustandsparameterdaten werden dann an die Steuereinrichtung übermittelt. Diese überprüft die Zustandsparameterdaten auf ihre Gültigkeit und speichert sie temporär in einer Speichereinrichtung ab. Vorzugsweise werden in Schritt a. mehrere Messungen der Zustandsparameter durchgeführt. Die Steuereinheit ermittelt dann einen Mittelwert aus den gemessenen Zustandsparameterdaten. Durch ein solches Vorgehen können Messfehler minmiert werden. Ein solcher Mittelwert kann ein arithmetischer Mittelwert, ein geometrischer Mittelwert, ein Median oder ein weiterer geeigneter Mittelwert sein. Es wäre auch denkbar, dass die Messergebnisse permanent in einer entsprechenden Speichereinrichtung gespeichert werden, welche der Vorrichtung zur Überwachung von Zustandsparametern zugehörig ist und in der Verschlussvorrichtung integriert ist.

In Punkt b. wird die Umgebung der Sende- und Empfangseinrichtung nach WLAN-Accesspoints gescannt. Vorzugsweise werden dabei mehrere BSSID (Basic Service Set Identification) detektiert. Vorteilhafterweise wird dabei die Signalstärke beim Empfang der sogenannte RSSI (Receive Strengh Indicator) festgestellt. Die Steuereinrichtung sortiert vorteilhafterweise die detektierten BSSIDs nach ihrer Signalstäke. Bevorzugt werden die beiden signalstärksten BSSIDs ausgewählt und in Schritt c. über die Sende- und Empfangseinrichtung an den Server übermittelt. Gibt es in der Umgebung keinerlei messbare WLAN-Accesspoints enthalten die übermittelten BSSID-Daten die Information, dass keine BSSIDS messbar sind. Diese BSSID werden dann in Schritt d. entsprechend zur Standortbestimmung verwendet.

Nach einer weiteren bevorzugten Ausführungsform erfolgt die Übermittlung der Zustandsparameterdaten und der BSSIDs über ein loT-Netzwerk. Ein solches IoT-Netzerk kann beispielsweise das Netzwerk von SIGFOX sein. Vorzugsweise werden erste Standortdaten der Sende- und Empfangseinrichtung durch einen IoT-Netzwerkbetreiber bereitgestellt, welche bei der Bestimmung des Standorts des Industriecontainers verwendet werden. Derartige Standortdaten können über Triangulation von Signalstärke Messungen an mehreren Empfängern erzeugt werden und können den jeweiligen Standort einer Sende- und Empfangseinrichtung nur grob bestimmen. Einige Mobilfunknetze beispielsweise 5G-Netze nutzen nicht die Triangulation von Signalstärkemessungen, sondern verwenden (ähnlich zu GPS) Signal-Laufzeitmessungen in Verbindung mit hoch-synchronisierten Uhren zur Triangulation und Ermittlung des Standortes.

Der Standort des Industriecontainers wird demnach durch den Server ermittelt. Vorteilhafterweise wird dazu eine Geolocation-Datenbank bezüglich der übermittelten BSSIDs abgefragt. Bevorzugt wird eine Geolocation-Datenbank bezüglich der übermittelten zwei signalstärksten BSSIDs abgefragt. Aus der Datenbank ergeben sich zweite Standortdaten, welche den Breitengrad und der Längengrad des Standorts des Industriecontainers umfassen. Bevorzugt werden die durch den IoT-Netzwerkbetreiber bereitgestellten ersten Standortdaten mit den aus den BSSIDS bestimmten zweiten Standortdaten hinsichtlich der Plausibilität verglichen. Befindet sich der zweite Standort im vom IoT-Netzwerkbetreiber angegebenen groben ersten Standortbereich, können die zweiten Standortdaten als valide angesehen werden. Bei diesem Verfahren ergibt sich eine bevorzugte Genauigkeit von kleiner als 30m.

Falls der aus den BSSIDs ermittelte zweite Standort nicht in den groben ersten Standortbereich fällt, wird vorzugsweise der erste Standort für die weitere Verwendung gewählt. Die Genauigkeit des Standorts liegt hier in einem Bereich zwischen 0,5 km und 5 km. Dieser erste Standort wird vorzugsweise auch dann für die weitere Verwendung gewählt, wenn keine BSSIDS ermittelt werden konnten und eine solche Information in Form der BSSID-Daten an den Server übermittelt wurde.

Nach einer weiteren Ausführungsform werden die Zustandsparameterdaten, die Standortdaten mit einem dazugehörigen Zeitstempel und eventuell die Identifikationsdaten durch den Server abgespeichert. Es wäre auch denkbar, dass bei unter- oder überschreiten bestimmter vorgegebener Grenzwerte der Zustandsparameterdaten entsprechende Hinweise an Service oder Wartungspersonal ausgegeben werden. Diesen können dann genaue Informationen bezüglich des Standorts des Industriecontainers bereitgestellt werden.

Nach einer bevorzugten Ausführungsform umfassen die Zustandsparameterdaten Daten zu dem Füllstand der Flüssigkeit in dem Industriecontainer. Vorzugsweise werden diese Füllstanddaten mittels zumindest einer kontaktlosen Sensoreinrichtung gemessen. Vorzugsweise ist die kontaktlose Sensoreinrichtung eine optische Sensoreinrichtung oder eine Radar-Sensoreinrichtung. Wie bereits beschrieben ermöglicht eine derartige optische Sensoreinrichtung ein kontaktloses Messen des Füllstands in dem Industriecontainer.

Nach einer weiteren Ausführungsform wird die Temperatur des Innenraums des Industriecontainers mittels zumindest einer Temperatursensoreinrichtung bestimmt.

Nach einer weiteren Ausführungsform kann eine Bewegung des Industriecontainers beispielsweise ein Kippen mittels einer Bewegungssensoreinrichtung bestimmt werden.

Nach einer weiteren Ausführungsform kann, die dem Industriecontainer entnommene Stoffmenge bestimmt werden. Unter Stoffmenge ist hier das sich in dem Industriecontainer befindliche Medium zu verstehen. Dies ist in der Regel eine Flüssigkeit oder ein rieselfähiger Stoff. Ein Vorsehen von Sensoren zur Detektion weiterer Zustandsparameter ist durchaus denkbar.

Mittels einer Temperatursensoreinrichtung kann die Innenraumtemperatur des Industriecontainers überwacht werden. Bei Übersteigen einer kritischen Temperatur kann dann ein entsprechendes Wartungspersonal alarmiert werden. Da durch das erfindungsgemäße Verfahren zugleich exakte Standortinformationen dem Server übermittelt werden, kann das Wartungspersonal schnell zu dem entsprechenden Industriecontainer gelangen.

Eine Bewegungssensoreinrichtung kann beispielsweise eine Kippbewegung detektieren. Insbesondere bei Lagerung von Gefahrgütern kann ein Kippen des Industriecontainers eine nicht unerhebliche Gefahr darstellen Auch hier kann das Wartungspersonal schnell zu dem entsprechenden Industriecontainer gelangen, da durch das erfindungsgemäße Verfahren zugleich exakte Standortinformationen bereitgestellt werden.

Eine entsprechende Messung einer Sensoreinrichtung kann kontinuierlich durchgeführt werden in bestimmten vorgegebenen Messintervallen oder auf Anweisung durch einen Server.

So kann beispielsweise eine Füllstandsmessung anhand eines Befehls durch den Server ausgeführt werden oder anhand eines vorgegebenen Messintervalls durchgeführt werden. Die Steuereinrichtung kann eine entsprechende Messung anhand unterschiedlicher Vorgaben auslösen. Denkbar wäre die Vorgabe eines Zeitintervalls innerhalb dessen eine Füllstandsmessung durchgeführt wird. Dazu ist die Steuereinrichtung vorteilhafterweise mit einem Zeitgeber ausgestattet. Es ist jedoch auch denkbar eine Füllstandsmessung aufgrund Sensordaten einer weiteren Sensoreinrichtung durchzuführen. So kann nach der Entnahme einer größeren Stoffmenge aus den Industriecontainer eine Füllstandsmessung durchgeführt werden, wobei eine solche Entnahme durch einen entsprechenden Sensor messbar ist. Denkbar wäre auch eine Füllstandsmessung bei Erreichen einer vorgegebenen Temperatur oder nach dem Erkennen einer Bewegung des Industriecontainers durchzuführen.

Die genannten Merkmale der bezüglich der Vorrichtung zur Überwachung zumindest eines Zustandsparameters eines Industriecontainers offenbarten bevorzugten Ausführungsformen sollen auch für das Verfahren zur Überwachung zumindest eines Zustandsparameters eines Industriecontainers offenbart sein. Ebenso sollen die für das Verfahren zur Überwachung zumindest eines Zustandsparameters eines Industriecontainers offenbarten Merkmale auch für die Vorrichtung zur Überwachung zumindest eines Zustandsparameters eines Industriecontainers offenbart sein.

Die Aufgabe wird weiterhin gelöst durch ein System zur Überwachung zumindest eines Zustandsparameters eines Industriecontainers umfassend zur Überwachung zumindest eines Zustandsparameters eines Industriecontainers nach einem der vorhergehenden Ausführungsformen, zumindest einen Server und zumindest eine Datenbank.

Die genannten Merkmale der bezüglich der Vorrichtung zur Überwachung zumindest eines Zustandsparameters eines Industriecontainers offenbarten, bevorzugten, Ausführungsformen sollen auch für das System offenbart sein.

Durch die Nutzung eines vorteilhaften IoT Wide Area- Netzwerkes ist keine besondere/eigene Netzwerkinfrastruktur notwendig.
Die Aufgabe wird weiterhin gelöst durch einen Industriecontainer insbesondere ein Intermediate Bulk Containers (IBC) mit einer Vorrichtung nach einem der vorhergehenden Ausführungsformen.

Die genannten Merkmale der bezüglich der Vorrichtung zur Überwachung zumindest eines Zustandsparameters eines Industriecontainers offenbarten, bevorzugten, Ausführungsformen sollen auch für den Industriecontainer offenbart sein.

Vorzugsweise ist eine Sendeeinrichtung zur Übermittlung von Identifikationsdaten des Industriecontainers an dem Industriecontainer angeordnet. Vorzugsweise wird zur Übermittlung der Identifikationsdaten des Industriecontainers eine Drahtlostechnologie beispielsweise eine NFC-Technologie, eine RFID-Technologie oder eine Bluetooth-Technologie genutzt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine schematische Darstellung einer in einer Verschlussvorrichtung integrierten Vorrichtung zur Überwachung von Zustandsparametern;
- Fig. 2: eine schematische Darstellung einer in einer Verschlussvorrichtung integrierten Vorrichtung zur Überwachung von Zustandsparametern nach einer weiteren Ausführungsform;
- Fig. 3: eine schematische Darstellung einer in einer Verschlussvorrichtung integrierten Vorrichtung zur Überwachung von Zustandsparametern nach einer weiteren Ausführungsform;
- Fig. 4: eine schematische Darstellung einer in einer Verschlussvorrichtung integrierten Vorrichtung zur Überwachung von Zustandsparametern nach einer weiteren Ausführungsform;
- Fig. 5: eine schematische Darstellung einer in einer Verschlussvorrichtung integrierten Vorrichtung zur Überwachung von Zustandsparametern nach einer weiteren Ausführungsform;
- Fig. 6: eine schematische Darstellung einer in einer Verschlussvorrichtung integrierten Vorrichtung zur Überwachung von Zustandsparametern nach einer weiteren Ausführungsform;
- Fig. 7: eine schematische Darstellung einer optischen Sensoreinrichtung;
- Fig. 8: eine schematische Darstellung eines Industriecontainers mit Vorrichtung zur Überwachung von Zustandsparametern;
- Fig. 9: eine schematische Darstellung eines Industriecontainers mit Vorrichtung zur Überwachung von Zustandsparametern;
- Fig. 10: System umfassend eine Vorrichtung zur Überwachung von Zustandsparametern;
- Fig. 11: Ablaufdiagramm für ein Verfahren zur Überwachung eines Zustandsparameters eines Industriecontainers;
- Fig. 12: eine schematische Darstellung einer in einer Verschlussvorrichtung integrierten Vorrichtung zur Überwachung von Zustandsparametern nach einer weiteren Ausführungsform.

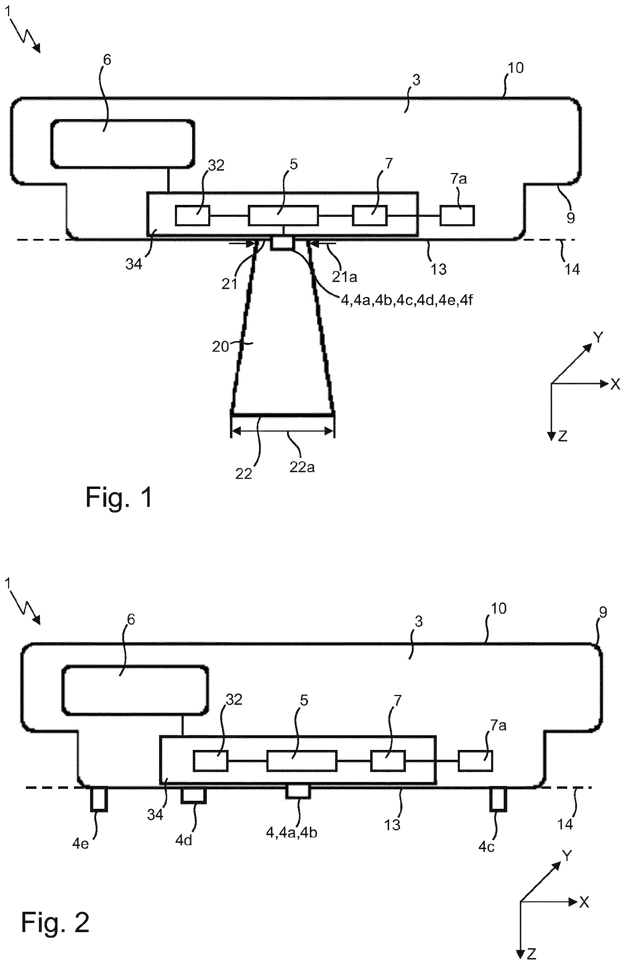

Die Figuren 1 bis 7 zeigen eine Vorrichtung (1) zur Überwachung zumindest eines Zustandsparameters eines Industriecontainers (2), insbesondere eines nach Norm gefertigten Intermediate Bulk Containers (IBC). Die Vorrichtung (1) ist in einer Verschlussvorrichtung (3) für den Industriecontainer (2) integriert und umfasst zumindest eine Sensoreinrichtung (4) zur Messung eines Zustandsparameters, eine Steuereinrichtung (5), eine Energieversorgungseinrichtung (6) und eine Sende- und Empfangseinrichtung (7), mittels welcher Daten (28, 29) an einen Server (8) übermittelbar sind und mittels welcher der Standort des Industriecontainers (2) bestimmbar ist.

Die Vorrichtung (1) weist ein geschlossenes Gehäuse (9) auf. Das Gehäuse (9) erstreckt sich entlang einer ersten horizontalen Richtung (X), einer zweiten horizontalen Richtung (Y) und einer Höhenrichtung (Z). Dabei weist das Gehäuse (3) einen oberen Abschnitt (10) auf, welcher ein Gewinde (11), das kompatibel zu einem entsprechenden weiteren Gewinde des Industriecontainers (2) ist.

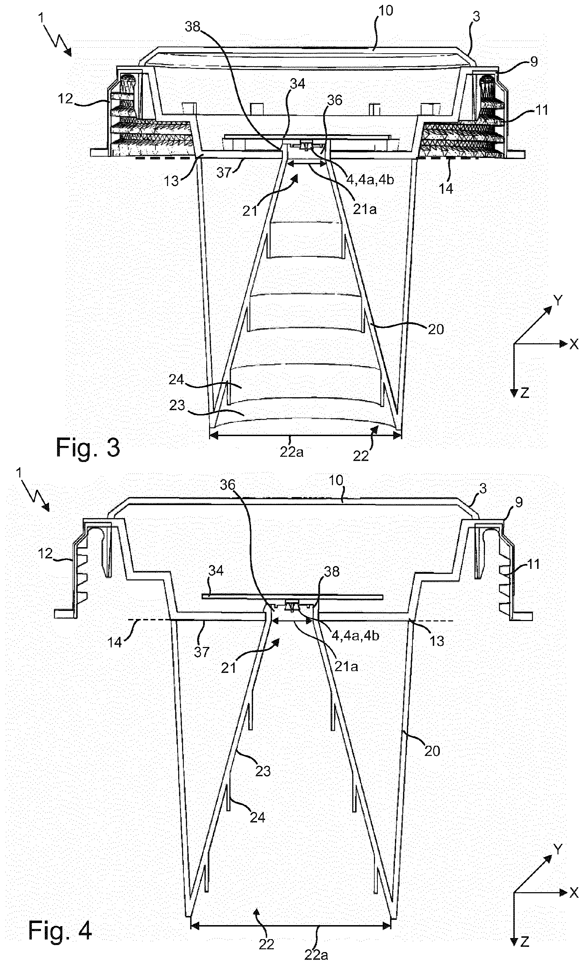

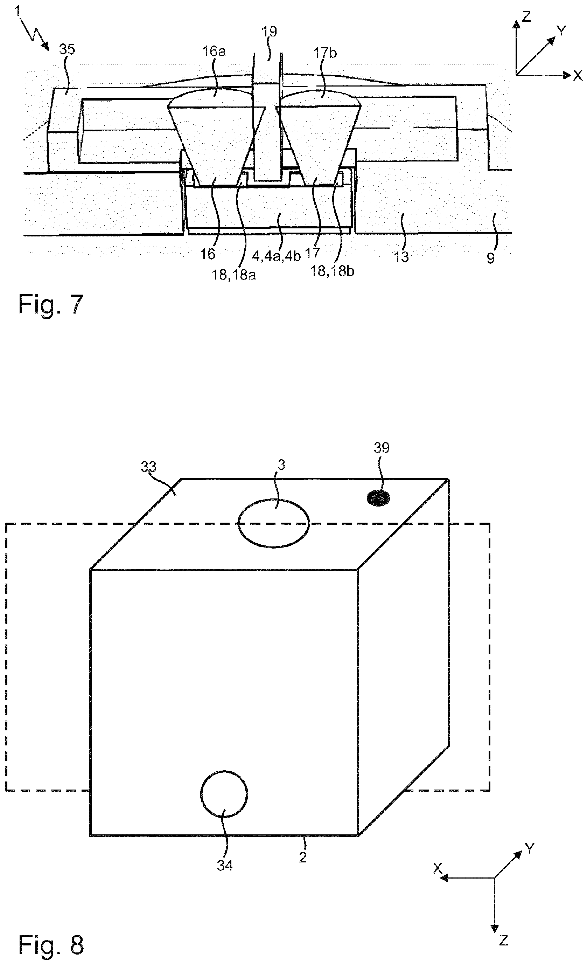

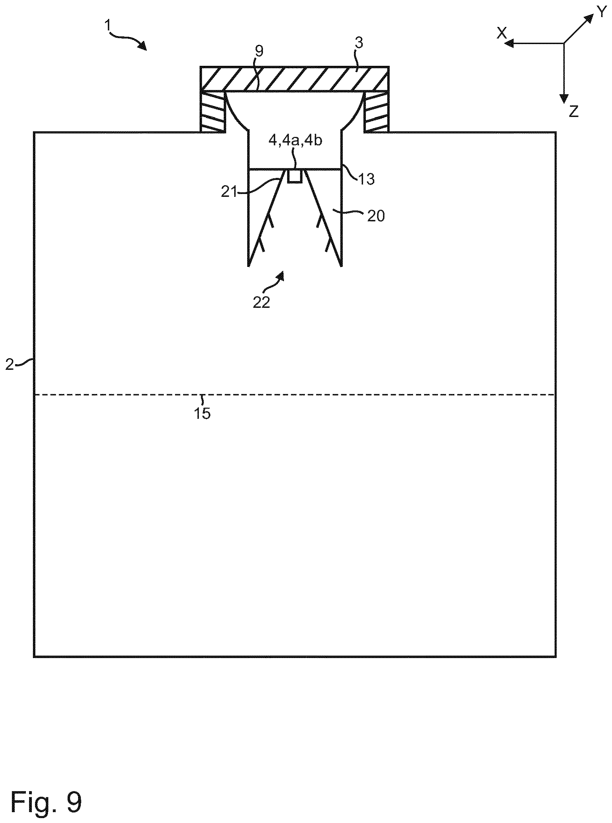

Die Figuren 8 und 9 zeigen schematisch einen Industriecontainer (2). Dieser weist üblicherweise an der Oberseite eine Öffnung auf, mittels welcher der Industriecontainer befüllt werden kann. Diese Öffnung umfasst in der Regel einen Flansch, der mit einem Gewinde versehen ist. Dieses Gewinde kann ein Innengewinde oder ein Außengewinde sein. Dementsprechend weist die Verschlussvorrichtung (3) ein kompatibles Innen- oder Außengewinde auf. Dies ist in den Figuren 3 und 4 dargestellt. Das Gehäuse ist geschlossen ausgeführt. Es ist denkbar, dass das Gehäuse als ein einziges geschlossenes Element ausgeführt ist. Ein solches Element kann aus einem Kunststoff bestehen, welcher mittels eines Spritzgussverfahrens hergestellt worden ist. Es ist jedoch auch möglich, dass das Gehäuse aus zwei Teilen besteht, welche dichtend verbunden sind. Dies kann durch eine Schnappverbindung oder eine Verschraubung erfolgen. Eine derartige Ausführungsform hat den Vorteil, dass einzelne Bauteile wie beispielsweise die Energieversorgungseinrichtung ausgetauscht werden können.

Die eine Steuereinrichtung (5), die Sende- und Empfangseinrichtung (7) und die Speichereinrichtung (32) können in einem integrierten Bauteil (34) enthalten sein, welches in dem geschlossenen Gehäuse (9) angeordnet ist.

Das Gehäuse (9) weist einen unteren Abschnitt (13) auf, welcher in Höhenrichtung (Z) von dem oberen Abschnitt (10) beabstandet ist. Dabei ist der untere Abschnitt (13) in einer Ebene (14) angeordnet, die durch Achsen aufgespannt ist, welche den horizontalen Richtungen (X, Y) entsprechen.

Die Vorrichtung (1) weist eine kontaktlose Sensoreinrichtung (4a) auf, mittels welcher der Füllstand der Flüssigkeit (15) in dem Industriecontainer (2) messbar ist. Diese kontaktlose Sensoreinrichtung (4a) kann eine optische Sensoreinrichtung (4b) sein. Denkbar wäre auch, dass weitere Sensoreinrichtungen vorgesehen sind, beispielsweise eine Temperatursensoreinrichtung (4d) und/oder eine Bewegungssensoreinrichtung (4c) und/oder eine Sensoreinrichtung zur Überwachung der aus dem Industriecontainer entnommenen Stoffmenge.

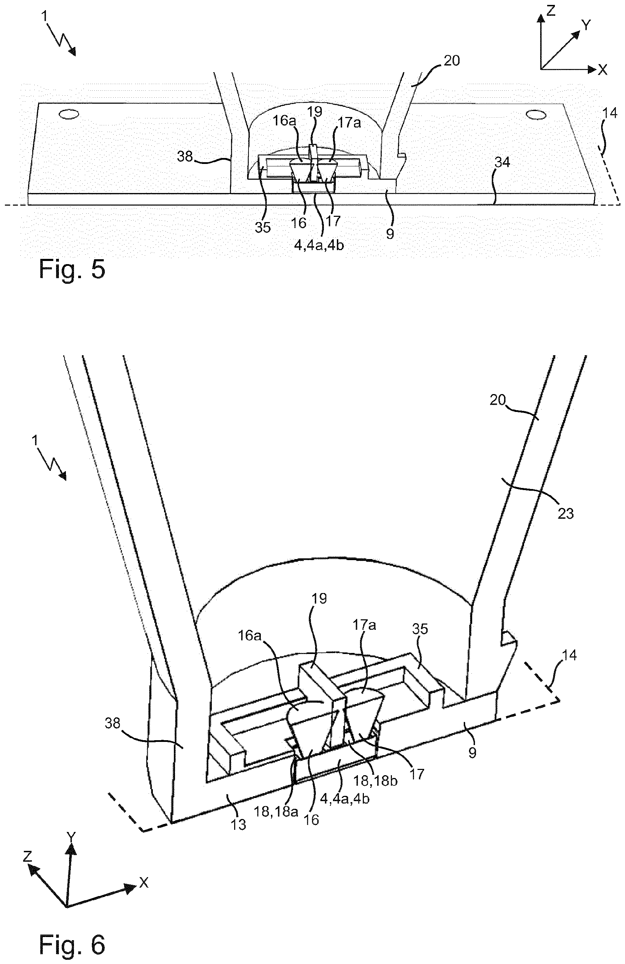

Die optische Sensoreinrichtung (4b) umfasst einen Photonenemitter (16) und einen Photonendetektor (17). Dies ist in den Figuren 5 bis 7 ersichtlich. Der Photonenemitter (16) und einen Photonendetektor (17) sind räumlich voneinander getrennt in dem unteren Abschnitt (13) des Gehäuses (9) angeordnet. Der Photonenemitter (16) ist hinter einem ersten transparenten Schutzfenster (18, 18a) und der Photonendetektor (17) hinter einem zweiten transparenten Schutzfenster (18, 18b).

Zwischen dem Photonenemitter (16) und dem Photonendetektor (17) ist eine für die entsprechenden Photonen nicht transparente Barriere (19) angeordnet, wobei sich die Barriere (19) zwischen den beiden transparenten Schutzfenstern (18, 18a, 18b) entlang der Höhenrichtung (Z) erstreckt. Hierdurch werden Rückreflexionen an dem Schutzfenster unterbunden, durch welche emittierte Photonen vom Photonenemitter (16) direkt zum Photonendetektor (17) gelangen würden. Durch die Barriere (19) erfolgt eine Einschränkung des Sichtfelds (17a) des Photonendetektors (17) sowie eine Einschränkung des Emissionskonus (16a) des Photonenemitters (16). Die optische Sensoreinrichtung (4d) umfasst darüber hinaus eine weitere Schutzbarriere (35). Diese ist rechteckförmig und erstreckt sich in Höhenrichtung (Z). Der Photonenemitter (16) und der Photonendetektor (17) sind zentrisch innerhalb dieser weiteren Schutzbarriere (35) angeordnet.

Die optische Sensoreinrichtung (4b) ist an dem unteren Abschnitt des Gehäuses (9) angeordnet. Der untere Abschnitt (13) des Gehäuses (9) weist dabei einen horizontalen Bereich (37) auf, welcher parallel zu der durch die horizontalen Richtungen (X, Y) aufgespannte Ebene (14) ist. Dieser ist durch eine Öffnung (36) unterbrochen, in welcher die optische Sensoreinrichtung (4b) angeordnet ist. Zwischen dem horizontalen Bereich (37) und der optischen Sensoreinrichtung (4b) ist eine Wandung (38) angeordnet, welche sich in Höhenrichtung (Z) erstreckt, so dass das Gehäuse geschlossen ist. Die optische Sensoreinrichtung (4b) befindet sich dabei in Höhenrichtung (Z) zwischen dem oberen Abschnitt (10) des Gehäuses (9) und dem horizontalen Bereich (37) des unteren Abschnitts (13) des Gehäuses (9). Das an sich geschlossene Gehäuse (9) ist also nur durch die Schutzfenster (18, 18a, 18b) für die Photonen transparent.

An dem unteren Abschnitt (13) des Gehäuses (9) ist eine trichterartige Spritzschutzeinrichtung (20) angeordnet. Die trichterartige Spritzschutzeinrichtung (20) erstreckt sich ausgehend vom unteren Abschnitt (13) entlang der Höhenrichtung (Z). Die trichterartige

Spritzschutzeinrichtung (20) weist eine erste Öffnung (21) und eine in Höhenrichtung (Z) gegenüberliegende zweite Öffnung (22) auf, wobei der erste Öffnungsdurchmesser (21a) der ersten Öffnung (21) kleiner als der zweite Öffnungsdurchmesser (22a) der zweiten Öffnung (22) ist. Der Durchmesser der trichterartigen Spritzschutzeinrichtung (20) vergrößert sich kontinuierlich ausgehend vom ersten Öffnungsdurchmesser (21a) zum zweiten Öffnungsdurchmesser (22a). Die optische Sensoreinrichtung (4b) ist somit zentrisch in der ersten Öffnung (21) angeordnet. Die eine trichterartige Spritzschutzeinrichtung (20) kann dabei einstückig mit der sich in Höhenrichtung (Z) erstreckenden Wandung (38) ausgebildet sein. Im diesem Bereich der Wandung (38) ist der Öffnungsdurchmesser (21a) konstant.

Die trichterartige Spritzschutzeinrichtung (20) weist eine innere Oberfläche (23) auf, an welcher lamellenartige Vorsprünge (24) angeordnet sind. Durch die trichterartige Spritzschutzeinrichtung (20) und lamellenartigen Vorsprünge (24) wird vermieden, dass der durch Bewegung des Industriecontainers (2) in Bewegung versetzte Inhalt an die Sensoreinrichtung schwappt.

Die Vorrichtung (1) kann weiterhin eine Temperatursensoreinrichtung (4b) und/oder eine Bewegungssensoreinrichtung (4c) und/oder eine Sensoreinrichtung zur Überwachung der aus dem Industriecontainer entnommenen Stoffmenge aufweisen.

Es ist vorteilhaft, wenn das Gehäuse (9) und /oder die Schutzfenster (18, 18a, 18b) und/oder die trichterartige Spritzschutzeinrichtung (20) superhydrophobe Oberflächen und/oder superamphiphobe Oberflächen und/oder Anti-Haft Oberflächen aufweisen. Somit können Verschmutzung dieser Teile vermieden werden. Derartige Oberflächen werden durch Beschichtungen, welche Nano- oder Mikrostrukturen aufweisen erreicht.

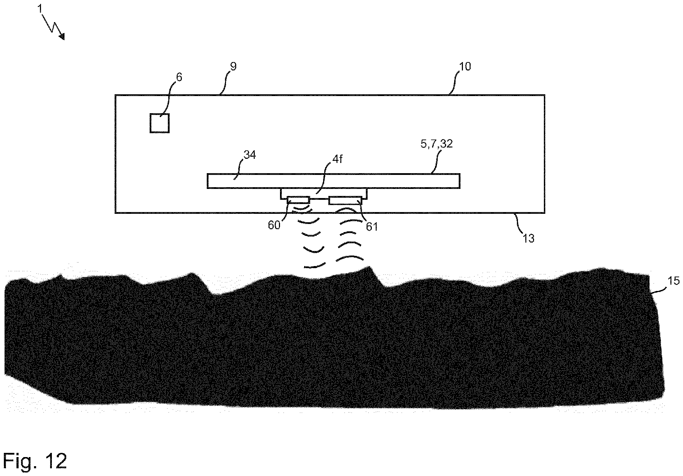

In Figur 12 ist eine Ausführungsform gezeigt, welche eine Radar-Sensoreinrichtung (4f) umfasst. Die Radar-Sensoreinrichtung (4f) ist in einem geschlossenen Gehäuse (9) angeordnet. Diese Ausführungsform umfasst natürlich auch die weiteren Elemente, wie eine Steuereinrichtung (5), eine Sende- und Empfangseinrichtung (7) und eine Speichereinrichtung (32).

Die Messung des Füllstands (15) in dem Industriecontainer (2) ähnelt dabei der optischen Messung insofern, dass mittels eines Emitters (60) ein Signal in Richtung des zu messenden Abstandes gesendet wird und der vom Inhalt des Industriecontainers (2) reflektierte Teil des Signals durch einen Detektor (61) wieder empfangen wird.

Die Sende- und Empfangseinrichtung (7) ist dazu geeignet über ein Wide Area Funknetz (25) mit dem Server (8) zu kommunizieren, wobei zur Standortbestimmung BSSID- (Basic Service Set Identification-) Daten (28) von in der Umgebung der Sende- und Empfangseinrichtung (7) sich befindlichen WLAN-Accesspoints (30) dem Server (8) übermittelbar sind. Das Wide Area Funknetz (25) kann ein loT-Netzwerk oder ein Mobilfunknetz sein. In der Regel werden diese Daten dabei zunächst über das Wide Area Funknetz (25) an einen IoT-Netzwerkbetreiber übermittelt. Dieser übermittelt die Daten dann über das Internet (26) an den Server (8). Die Sende- und Empfangseinrichtung (7) ist demnach geeignet mit einem WLAN- Netz (27) zu kommunizieren. Die Sende- und Empfangseinrichtung (7) kann auch eine Antenneneinrichtung (7a) umfassen.

Die Sende- und Empfangseinrichtung (7) ist vorzugsweise dazu geeignet Identifikationsdaten einer Sendeeinrichtung (39) zur Übermittlung von Identifikationsdaten des Industriecontainers (2) zu empfangen, wobei zur Übermittlung der Identifikationsdaten des Industriecontainers (2) eine Drahtlostechnologie beispielsweise eine NFC-Technologie, eine RFID-Technologie oder eine Bluetooth-Technologie genutzt wird.

An dem Industriecontainer (2) ist demnach vorteilhafterweise eine Sendeeinrichtung (39) zur Übermittlung von Identifikationsdaten des Industriecontainers (2) angeordnet. Dies ist schematisch in Figur 8 ersichtlich.

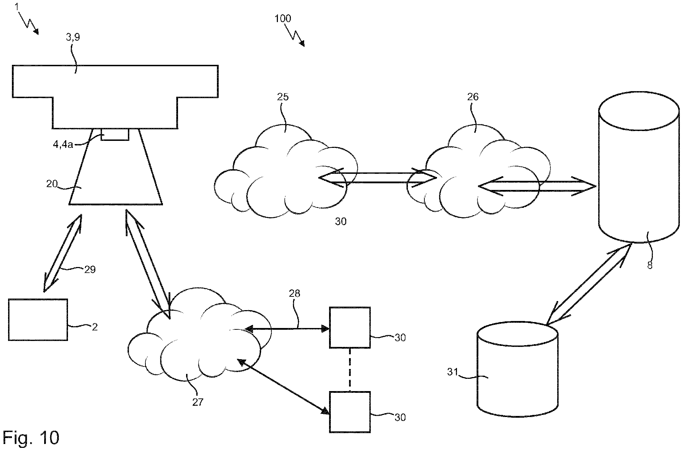

Ein System (100) zur Überwachung zumindest eines Zustandsparameters eines Industriecontainers ist in Figur 10 schematisch dargestellt. Das System (100) umfasst eine Vorrichtung (1) zur Überwachung zumindest eines Zustandsparameters eines Industriecontainers (2) zumindest einen Server (8) und zumindest eine Datenbank (31).

Zur Überwachung zumindest eines Zustandsparameters insbesondere eines Füllstandes eines Industriecontainers (2), kann ein Verfahren verwendet werden, welches folgende Verfahrensschritte umfasst:
a. Durchführen einer Messung zumindest eines Zustandsparameters mittels zumindest einer Sensoreinrichtung (4);
b. Ermittlung von BSSID- (Basic Service Set Identification-) Daten von in der Umgebung der Sende- und Empfangseinrichtung (7) sich befindlichen WLAN-Accesspoints (30);
c. Übermittlung der Zustandsparameterdaten (29) und der BSSID-Daten (28) durch die Sende- und Empfangseinrichtung (7) an einen Server (8);
d. Verwendung der BSSID-Daten (28) zur Bestimmung des Standorts des Industriecontainers (2) durch den Server (8).

Die Übermittlung der Zustandsparameterdaten (29) und der BSSID-Daten (28) erfolgt über ein loT-Netzwerk, wobei Standortdaten der Sende- und Empfangseinrichtung (7) durch einen IoT-Netzwerkbetreiber bereitgestellt werden, welche bei der Bestimmung des Standorts des Industriecontainers (2) verwendet werden.

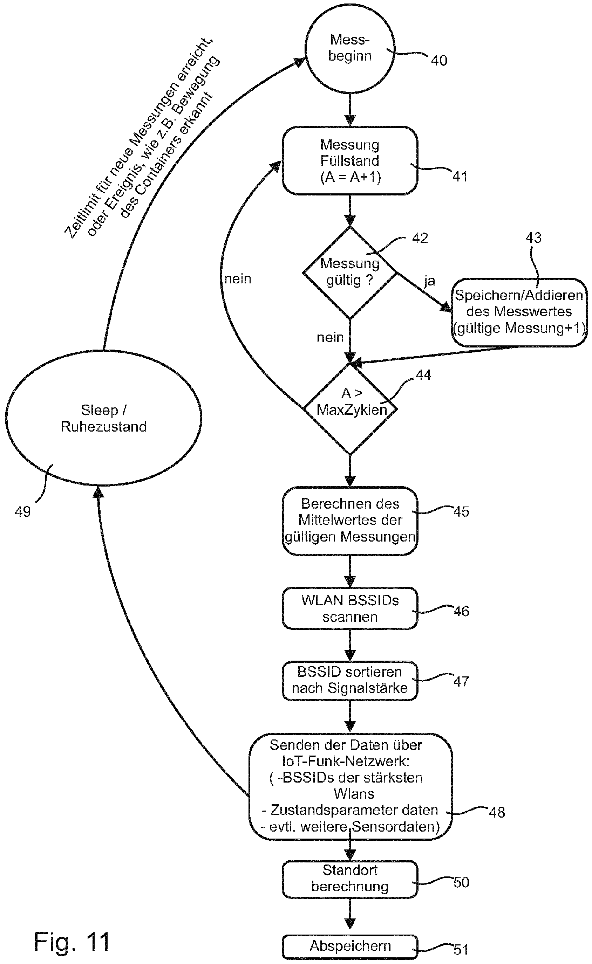

In Figur 11 ist ein Ablaufdiagramm dargestellt, welches einen Ablauf einer Messung eines Füllstandes des Industriecontainers darstellt. In Schritt 1 (49) wird die Messung gestartet, wonach in Schritt 2 (49) die Messung des Füllstandes durchgeführt wird. Die gemessenen Daten werden der Steuereinrichtung (5) übermittelt. Diese prüft die Daten hinsichtlich der Gültigkeit der Messung in Schritt 3 (42). Falls die Messung gültig war, werden in Schritt 4 (43) die Daten in der Speichereinrichtung (32) abgespeichert. In Schritt 5 (44) wird die Anzahl an Messzyklen A überprüft. Falls diese Anzahl A größer als ein vorgegebener Wert (Max Zyklen) ist, wird zu Schritt 6 (45) vorgeschritten. Ansonsten wird Schritt 2 (41) wiederholt. In Schritt 6 (45) wird dann durch die Steuereinrichtung (5) ein Mittelwert aus den gemessenen Daten gebildet, wodurch der Messfehler reduziert werden soll. In Schritt 7 (46) werden dann mittels der Sende- und Empfangseinrichtung (7) die umgebenden WLAN-Netzwerke (27) gescannt und die BSSIDs der WLAN-Accesspoints (30) abgefragt. In Schritt 8 (47) werden die BSSIDs anhand deren Signalstärke durch die Steuereinrichtung (5) sortiert. In Schritt 9 (48) werden die Füllstanddaten über ein loT-Netzwerk (25) an einen IoT-Netzwerk-Betreiber und dann über das Internet an den Server (8) übermittelt.

Falls der Industriecontainer mit einer Sendeeinrichtung (39) zur Übermittlung von Identifikationsdaten des Industriecontainers (2) ausgestattet ist, werden die entsprechenden Identifikationsdaten von der Sende- und Empfangseinrichtung (7) empfangen und der Steuereinrichtung (5) weitergeleitet. Bei der Übertragung der Zustandsdaten und der Standortdaten werden dann ebenfalls die Identifikationsdaten durch die Sende- und Empfangseinrichtung (7) an den Server 8 weitergeleitet.

Die Vorrichtung (1) zur Überwachung zumindest eines Zustandsparameters eines Industriecontainers (2) wird dann in Schritt 10 (49) in einen Ruhezustand versetzt. Die Vorrichtung (1) zur Überwachung zumindest eines Zustandsparameters eines Industriecontainers (2) wird wieder aktiv, wenn ein vorgegebenes Zeitlimit für eine neue Messung erreicht ist, wenn ein Befehl des Servers (8) empfangen wird. Eine Aktivierung kann auch durch weitere Ereignisse ausgelöst werden, welche durch verschiedene Sensoreinrichtungen feststellbar sind. Ein solches Ereignis kann eine Bewegung des Industriecontainers (2) sein (gemessen durch eine Bewegungssensoreinrichtung (4c)), ein Temperaturanstieg über einen vorgegebenen Schwellwert (gemessen durch eine Temperatursensoreinrichtung (4b)) oder eine Entnahme einer bestimmten Menge an Inhalt des Industriecontainers (gemessen durch eine entsprechende Sensoreinrichtung).

In Schritt 11 (50) berechnet der Server den Standort unter Verwendung der BSSIDs und der durch den IoT-Netzwerkbetreiber bereitgestellten groben Standortdaten. Dabei wird eine Geolacation-Datenbank (31) bezüglich der BSSIDs abgefragt. In Schritt 12 (51) werden die Zustandsparameterdaten beziehungsweise die Füllstanddaten zusammen mit den Standortdaten und einem Zeitstempel abgespeichert. Sollte der Zustandsparameter beziehungsweise der Füllstand einen kritischen Wert unter- oder überschreiten, kann ein Serviceunternehmen beauftragt werden den Industriecontainer (2) auszutauschen und/oder zu befüllen. Dem Serviceunternehmen können dabei die genauen Standortdaten des Industriecontainers (2) mitgeteilt werden, wodurch ein aufwendiges Feststellen des Standorts durch das Serviceunternehmen entfällt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zur Überwachung zumindest eines Zustandsparameters
- 2: Industriecontainer
- 3: Verschlussvorrichtung
- 4: Sensoreinrichtung
- 4a: kontaktlose Sensoreinrichtung
- 4b: optische Sensoreinrichtung
- 4c: Bewegungssensoreinrichtung
- 4d: Temperatursensoreinrichtung
- 4e: Sensoreinrichtung zur spektralen Analyse des Inhalts des Industriecontainers
- 4f: Radar-Sensoreinrichtung
- 5: Steuereinrichtung
- 6: Energieversorgungseinrichtung
- 7: Sende- und Empfangseinrichtung
- 7a: Antenneneinrichtung
- 8: Server
- 9: Gehäuse
- 10: oberer Abschnitt des Gehäuses
- 11: Gewinde
- 12: Griffbereich
- 12a: seitlicher Abschnitt des Sitzteils
- 13: unterer Abschnitt des Gehäuses
- 14: Ebene
- 15: Füllstand der Flüssigkeit
- 16: Photonenemitter
- 16a: Emissionskonus
- 17: Photonendetektor
- 17a: Sichtfeld des Photonendetektors
- 18: Schutzfenster
- 18a: erstes Schutzfenster
- 18b: zweites Schutzfenster
- 19: nicht transparente Barriere
- 20: trichterartige Spritzschutzeinrichtung
- 21: erste Öffnung
- 21a: Öffnungsdurchmesser der ersten Öffnung
- 22: zweite Öffnung
- 22a: Öffnungsdurchmesser der zweiten Öffnung
- 23: innere Oberfläche der Spritzschutzvorrichtung
- 24: lamellenartige Vorsprünge
- 25: Wide Area Funknetz
- 26: Internet
- 27: WLAN
- 28: BSSID-Daten
- 29: Zustandsparameterdaten
- 30: WLAN-Accesspoints
- 31: Datenbank
- 32: Speichereinrichtung
- 33: Oberseite des Industriecontainers
- 34: integriertes Bauteil
- 35: weitere Schutzbarriere
- 36: Öffnung des unteren Abschnitts
- 37: Bereich
- 38: Wandung
- 39: Sendeeinrichtung zur Übermittlung von Identifikationsdaten des Industriecon tainers
- 40: Schritt 1
- 41: Schritt 2
- 42: Schritt 3
- 43: Schritt 4
- 44: Schritt 5
- 45: Schritt 6
- 46: Schritt 7
- 47: Schritt 8
- 48: Schritt 9
- 49: Schritt 10
- 50: Schritt 11
- 51: Schritt 12
- 100: System zur Überwachung zumindest eines Zustandsparameters
- X: erste horizontale Richtung
- Y: zweite horizontale Richtung
- Z: Höhenrichtung
- A: Messzyklen

## Patentansprüche

1. Vorrichtung (1) zur Überwachung zumindest eines Zustandsparameters eines Industriecontainers (2) insbesondere eines nach Norm gefertigten Intermediate Bulk Containers (IBC),
**dadurch gekennzeichnet**
**dass** die Vorrichtung (1) in einer Verschlussvorrichtung (3) für den Industriecontainer (2) integriert ist und zumindest eine Sensoreinrichtung (4) zur Messung eines Zustandsparameters, eine Steuereinrichtung (5), eine Energieversorgungseinrichtung (6) und eine Sende- und Empfangseinrichtung (7), mittels welcher Daten (28, 29) an einen Server (8) übermittelbar sind und mittels welcher der Standort des Industriecontainers (2) bestimmbar ist, umfasst.

2. Vorrichtung (1) nach Anspruch 1,
**dadurch gekennzeichnet, dass**.
die Vorrichtung (1) ein geschlossenes Gehäuse (9) aufweist, welches sich entlang den horizontalen Richtungen (X, Y) und einer Höhenrichtung (Z) erstreckt, wobei das Gehäuse (3) einen oberen Abschnitt (10) aufweist, welcher ein Gewinde (11), das kompatibel zu einem entsprechenden weiteren Gewinde des Industriecontainers (2) ist und einen Griffbereich (12) aufweist, wobei das Gehäuse (9) einen unteren Abschnitt (13) aufweist, welcher in Höhenrichtung (Z) von dem oberen Abschnitt (10) beabstandet ist, wobei der untere Abschnitt (13) in einer Ebene (14) angeordnet ist, die durch den horizontalen Richtungen (X, Y) entsprechenden Achsen aufgespannt ist.

3. Vorrichtung (1) nach Anspruch 1 oder 2,
**dadurch gekennzeichnet, dass**
zumindest eine kontaktlose Sensoreinrichtung (4a)vorgesehen ist, mittels welcher der Füllstand der Flüssigkeit (15) in dem Industriecontainer (2) messbar ist, wobei die kontaktlose Sensoreinrichtung (4a) eine optische Sensoreinrichtung (4b) oder eine Radar-Sensoreinrichtung (4f) ist.

4. Vorrichtung (1) nach einem der vorhergehenden Ansprüche,
**dadurch gekennzeichnet, dass**
die Vorrichtung (1) eine Temperatursensoreinrichtung (4d) und/oder eine Bewegungssensoreinrichtung (4c) und/oder eine Sensoreinrichtung zur Überwachung der aus dem Industriecontainer entnommenen Stoffmenge und/oder eine Sensoreinrichtung zur spektralen Analyse (4e) des Inhalts des Industriecontainers aufweist.

5. Vorrichtung nach einem der Ansprüche 3 bis 4,
**dadurch gekennzeichnet, dass**
die optische Sensoreinrichtung (4b) einen Photonenemitter (16) und einen Photonendetektor (17) aufweist, welche räumlich getrennt angeordnet sind, wobei der Photonenemitter (16) und der Photonendetektor (17) an dem unteren Abschnitt (13) des Gehäuses (9) angeordnet sind.

6. Vorrichtung nach Anspruch 5,
**dadurch gekennzeichnet, dass**
der Photonenemitter (16) und der Photonendetektor (17) jeweils hinter einem für die entsprechenden Photonen transparenten Schutzfenster (18, 18a, 18b) angeordnet sind, wobei zwischen dem Photonenemitter (16) und dem Photonendetektor (17) eine für die entsprechenden Photonen nicht transparente Barriere (19) angeordnet ist, wobei sich die Barriere (19) zwischen den beiden transparenten Schutzfenstern (18, 18a, 18b) entlang der Höhenrichtung (Z) erstreckt.

7. Vorrichtung nach einem der Ansprüche 3 bis 6,
**dadurch gekennzeichnet, dass**.
an dem unteren Abschnitt (13) des Gehäuses (9) eine trichterartige Spritzschutzeinrichtung (20) angeordnet ist, wobei die trichterartige Spritzschutzeinrichtung (20) sich ausgehend vom unteren Abschnitt (13) entlang der Höhenrichtung (Z) erstreckt, wobei die trichterartige Spritzschutzeinrichtung (20) eine erste Öffnung (21) und eine in Höhenrichtung (Z) gegenüberliegende zweite Öffnung (22) aufweist, wobei der erste Öffnungsdurchmesser (21a) der ersten Öffnung (21) kleiner als der zweite Öffnungsdurchmesser (22a) der zweiten Öffnung (22) ist, wobei die optische Sensoreinrichtung (4a) zentrisch in der ersten Öffnung (21) angeordnet ist.

8. Vorrichtung nach Anspruch 7,
**dadurch gekennzeichnet, dass**
die trichterartige Spritzschutzeinrichtung (20) eine innere Oberfläche (23) aufweist, an welcher lamellenartige Vorsprünge (24) angeordnet sind.

9. Vorrichtung nach einem der Ansprüche 6 bis 8,
**dadurch gekennzeichnet, dass**
das Gehäuse (9) und/oder die Schutzfenster (18, 18a, 18b) und/oder die trichterartige Spritzschutzeinrichtung (20) superhydrophobe Oberflächen und/oder superamphiphobe Oberflächen und/oder Anti-Haft-Oberflächen aufweisen.

10. Vorrichtung nach einem der vorhergehenden Ansprüche,
**dadurch gekennzeichnet, dass**
die Sende- und Empfangseinrichtung (7) dazu geeignet ist über ein Wide Area Funknetz (25) mit dem Server (8) zu kommunizieren, wobei zur Standortbestimmung BSSID- (Basic Service Set Identification-) Daten (28) von in der Umgebung der Sende- und Empfangseinrichtung (7) sich befindlichen WLAN-Accesspoints (30) dem Server (8) übermittelbar sind, wobei das Wide Area Funknetz (25) ein loT-Netzwerk oder ein Mobilfunknetz ist, wobei die Sende- und Empfangseinrichtung (7) dazu geeignet ist, Identifikationsdaten einer Sendeeinrichtung (39) zur Übermittlung von Identifikationsdaten des Industriecontainers (2) zu empfangen, wobei zur Übermittlung der Identifikationsdaten des Industriecontainers (2) eine Drahtlostechnologie beispielsweise eine NFC-Technologie, eine RFID-Technologie oder eine Bluetooth-Technologie genutzt wird.

11. Verfahren zur Überwachung zumindest eines Zustandsparameters eines Industriecontainers (2), umfassend folgende Verfahrensschritte:
a. Durchführen einer Messung zumindest eines Zustandsparameters mittels zumindest einer Sensoreinrichtung (4);
b. Ermittlung von BSSID- (Basic Service Set Identification-) Daten von in der Umgebung der Sende- und Empfangseinrichtung (7) sich befindlichen WLAN-Accesspoints (30);
c. Übermittlung der Zustandsparameterdaten (29) und der BSSID-Daten (28) durch die Sende- und Empfangseinrichtung (7) an einen Server (8);
d. Verwendung der BSSID-Daten (28) zur Bestimmung des Standorts des Industriecontainers (2) durch den Server (8).

12. Verfahren nach Anspruch 11,
**dadurch gekennzeichnet, dass**
die Übermittlung der Zustandsparameterdaten (29) und der BSSID-Daten (28) über ein loT-Netzwerk erfolgt, wobei Standortdaten der Sende- und Empfangseinrichtung (7) durch einen IoT-Netzwerkbetreiber bereitgestellt werden, welche bei der Bestimmung des Standorts des Industriecontainers (2) verwendet werden.

13. Verfahren nach Anspruch 11 oder 12
**dadurch gekennzeichnet, dass**
die Zustandsparameterdaten (29) Daten zu dem Füllstand der Flüssigkeit (15) in dem Industriecontainer (2) umfassen, wobei diese Füllstanddaten mittels zumindest einer kontaktlosen Sensoreinrichtung (4b) gemessen werden, wobei die kontaktlose Sensoreinrichtung (4b) eine optische Sensoreinrichtung (4a) ist.

14. System (100) zur Überwachung zumindest eines Zustandsparameters eines Industriecontainers umfassend eine Vorrichtung (1) nach einem der vorhergehenden Ansprüche 1 bis 10, zumindest einen Server (8) und zumindest eine Datenbank (31).

15. Industriecontainer (2) insbesondere ein Intermediate Bulk Containers (IBC) mit einer Vorrichtung (1) nach einem der Ansprüchel bis 10.
